# EUROPEAN PATENT APPLICATION

(11) **EP 4 826 678 A1**
(43) Date of publication of application: **21.10.2026**
(21) Application number: 25170451.6
(22) Date of filing: 14.04.2025
(51) Int. Cl.: G06V 20/52, G06V 40/10

(54) **A COMPUTER-IMPLEMENTED METHOD FOR ENTITY RE-IDENTIFICATION, AND ASSOCIATED MONITORING DEVICE**

(71) Applicant: TOYOTA JIDOSHA KABUSHIKI KAISHA, Toyota-shi, Aichi-ken, 471-8571 (JP)
(72) Inventor: FRANCESCA, Gianpiero, 1140 Brussels (BE); GARATTONI, Lorenzo, 1140 Brussels (BE); BIRATTARI, Mauro, 1050 Brussels (BE); KEGELEIRS, Miquel, 1050 Brussels (BE)
(74) Representative: Cabinet Beau de Loménie

(57) **Abstract**

The invention concerns a method for entity re-identification, the method being implemented by a first monitoring device of a plurality of monitoring devices moving in an environment and comprising: detecting a mobile entity from data captured by a sensor of the first monitoring device; generating first embeddings of the detected mobile entity; receiving, from a second monitoring device of the plurality, second embeddings of a mobile entity detected from data captured by a sensor of the second monitoring device; and, identifying the mobile entities detected by the first and second monitoring devices as a single mobile entity if a distance between the first and second embeddings is less than a predetermined threshold.

## Description

### BACKGROUND OF THE INVENTION

### 1. Field of the invention

The present invention generally relates to entity re-identification, and more specifically to a computer-implemented method for entity re-identification implemented by a monitoring device moving in an environment. The invention also concerns a monitoring device implementing such re-identification method.

### 2. Description of Related Art

Re-identification is a critical concept in the fields of computer vision and machine learning. It can be defined as a process for recognizing and matching entities (e.g., objects or individuals) across different images taken from different viewpoints, generally at different times. Re-identification is essential in a wide range of domains where continuous surveillance or monitoring is required, such as in security systems or autonomous vehicles, in which it is required to maintain a consistent identity for entities moving across various camera views, despite possible variations in appearance due to occlusions, and/or to changes in lighting and pose.

Current systems implementing re-identification usually consider cameras which are fixed and that capture scenes from predetermined viewpoints. While these cameras provide a stable and consistent view of a particular area, this technical solution proves to be challenging for matching entities across different views. As a matter of fact, fixed cameras capture only specific viewpoints of the scene. The fact remains that when an entity moves between cameras placed in different locations, the perspective changes significantly. For example, a person walking from one camera to another may appear from the front in that camera and from the side or back in another. Such changes in perspective can cause significant appearance differences, making it hard for current systems to match the same person across cameras.

In addition, entities may be partially or completely hidden by other entities or obstacles in a scene. In crowded environments, such as a busy shopping mall or a street corner, re-identifying people when they cross with each other and/or when they are temporarily hidden from view can be extremely difficult.

Moreover, current cameras do not capture the scene with enough detail to identify distinguishing features of entities, especially in large-scale surveillance systems where a fixed camera that is far from a targeted entity may fail to capture detailed features, like facial characteristics, which are often used for (re-)identification.

There is thus a need for methods solving problems of the prior art.

### SUMMARY

To this end, the present invention first provides a computer-implemented method for entity re-identification, the method being implemented by a first monitoring device of a plurality of monitoring devices able to move in an environment and comprising:
- detecting a mobile entity from data captured by a sensor of the first monitoring device;
- generating first embeddings of the detected mobile entity;
- receiving, from a second monitoring device of the plurality, second embeddings of a mobile entity detected from data captured by a sensor of the second monitoring device; and,
- identifying the mobile entities detected by the first and second monitoring devices as a single mobile entity if a distance between the first and second embeddings is less than a predetermined threshold, said identification step then corresponding to a "re-identification", and as different mobile entities otherwise.

In the present description, the term "monitoring devices" encompasses a range of mobile sensing devices, including robots, designed to observe and gather data from their surroundings. To that end, these devices are typically equipped with a variety of sensors, such as cameras or sound sensors, and they can move in their environment autonomously or with minimal human oversight.

In the present description, the term "mobile entities" refers to any kind of physical entity, such as a person, an animal, a robot, a vehicle, or specific items, such as packages, bags, or equipment.

In the present description, the term "environment" refers to a geographical area in which the monitoring devices (e.g., the robots) can move to detect and identify mobile entities (e.g., individuals). This environment can correspond to either an indoor environment - including spaces such as rooms, homes, offices, factories, warehouses, or hospitals - or an outdoor environment, including both natural and man-made landscapes - such as streets, parks, gardens or roads -.

This method then offers the advantage of exploiting the distributed nature of robot swarms to perform re-identification. In a known way, a "robot swarm" refers to a group of autonomous robots that work together to perform tasks in a coordinated manner, without centralized control. Each robot operates both based on local information, and from data obtained by interacting with other robots.

In addition, the robots forming the robot swarm are mobile, and may have a small form factor, which allows them to reach different positions in the environment and observe scenes at close range and /or from multiple perspectives, mitigating some of the limitations of current static camera-based methods.

In particular implementations, the method further comprises transmitting the first embeddings, by the first monitoring device and to the second monitoring device, to enable the second monitoring device to determine whether a mobile entity detected by the second monitoring device is also detected by the first monitoring device or not.

In particular implementations, data exchange between the first and second monitoring devices is implemented using short-range wireless communications between the first and second monitoring devices.

In particular implementations, the first and second embeddings are generated by a machine learning model trained to generate closed embeddings for similar mobile entities (e.g., to minimize a distance between embeddings of a same mobile entity), and distant embeddings for different mobile entities (e.g., to maximize the distance between embeddings of different entities).

In particular implementations, the method further comprises:
- training the machine learning model; and,
- fine-tuning the machine learning model using a triplet loss approach.

This feature offers the advantage of improving feature separation.

In particular implementations, the method further comprises tracking the detected mobile entity by the first monitoring device.

In particular implementations, the first and second monitoring devices correspond to robots, the captured data corresponds to images from the robots' environment captured by cameras on the robots, and the mobile entities correspond to individuals moving in the environment.

According to a second aspect, the present invention concerns a monitoring device configured to implement the re-identification method of the invention.

A further aspect of the invention concerns a re-identification system comprising a monitoring device according to the second aspect, named "first monitoring device", and a second monitoring device, wherein the first and second monitoring devices are equipped with a same type of sensor for detecting a mobile entity, and wherein the first and second monitoring devices use a same machine learning model to generate embeddings.

Embodiments of the present invention also extend to programs which, when run on a computer or processor, cause the computer or processor to carry out the method described above or which, when loaded into a programmable device, cause that device to become the device described above. The program may be provided by itself, or carried by a carrier medium. The carrier medium may be a storage or recording medium, or it may be a transmission medium such as a signal. A program embodying the present invention may be transitory or non-transitory.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 depicts, for illustrative purposes, a re-identification system in which the invention is applicable;
- FIG. 2 illustrates on-board modules in a monitoring device, according to an example of implementation of the invention;
- FIG. 3 illustrates an example of the hardware architecture of the monitoring device of Figure 2;
- FIG. 4 is a flowchart of a re-identification method executed by a monitoring device, according to an example of implementation of the invention;
- FIG. 5 is a flowchart of a re-identification method executed by a monitoring device, according to another example of implementation of the invention;
- FIG. 6 shows cumulative matching characteristics (CMC) plots for robots implementing the method of the invention and for CCTV cameras, when communication is enabled and disabled;
- FIG. 7 shows mean average precision (mAP) values for robots implementing the method of the invention and for CCTV cameras, when communication is enabled and disabled;
- FIG. 8 shows purity values for robots implementing the method of the invention and for CCTV cameras, when communication is enabled and disabled;
- FIG. 9 shows CMC plots for robots implementing the method of the invention and for CCTV cameras, for different communication ranges;
- FIG. 10 shows mAP values for robots implementing the method of the invention and for CCTV cameras, for different communication ranges;
- FIG. 11 shows purity values for robots implementing the method of the invention and for CCTV cameras, for different communication ranges;
- FIG. 12 shows CMC plots for robots implementing the method of the invention for eight robots and for CCTV cameras, at different moments, when communication is enabled; and,
- FIG. 13A, 13B and 13C show CMC plots, mAP values, and purity values, with and without obstacles.

### DETAILED DESCRIPTION OF EMBODIMENTS

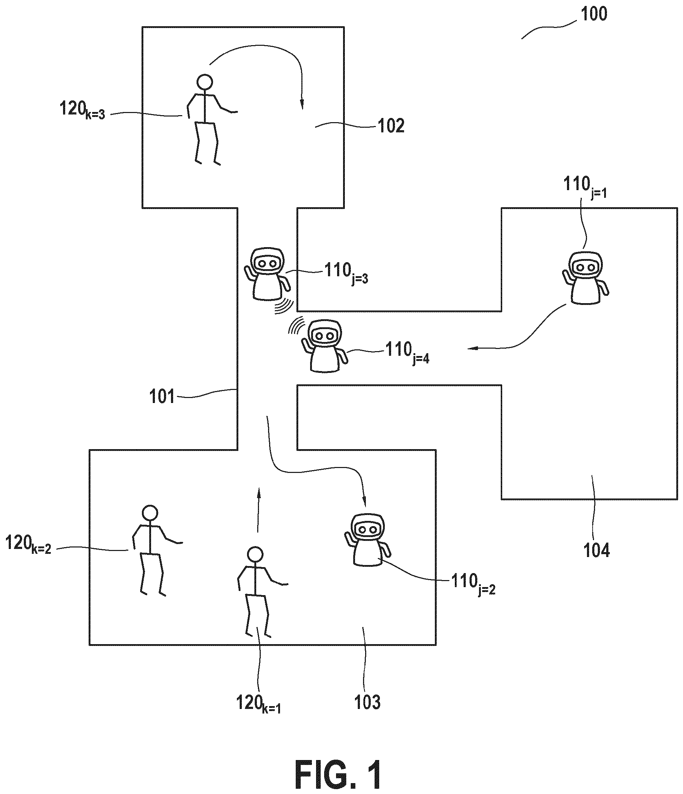

Figure 1 depicts, for illustrative purposes, a re-identification system 100 in which the invention is applicable.

As illustrated by Figure 1, the re-identification system 100 comprises monitoring devices 110_{*j*=1..4} designed as robots and forming a robot swarm moving in an environment 101. The fact that the monitoring devices take the form of robots should not be regarded as a limitation. As a matter of fact, the invention remains applicable regardless of the form of these monitoring devices. In addition, the number of monitoring devices should not be seen as a limiting factor, and the skilled person can easily apply the teachings to a number of monitoring devices other than four.

In this example, the environment 101 is an indoor environment that comprises three rooms 102, 103, 104 of different geometry and different sizes. The three rooms are organized in a star-shaped configuration, with all the rooms meeting at a central point through corridors of varying lengths and widths. However, different configurations may be considered, such as ring, bus, or line configurations, and the environment 101 may also comprise walls with various irregularities and indentations. In addition, the indoor setting should not be considered a limitation. The invention remains applicable whatever the type of environment considered (i.e., indoor or outdoor).

Mobile entities 120_{*k*=1..3}, which correspond to individuals in this example, are located in that environment 101. These individuals 120_{*k*=1..3} can move in different directions - as indicated by the presence of arrows near them -, and/or can be static. They can also change the direction in which they move and/or the speed at which they move.

In the present example, the robots 110_{*j*=1..4} are equipped with on-board cameras configured to capture the immediate surroundings. As they move through the environment 101, they acquire images of that environment 101, detect individuals 120_{*k*=1..3} they encounter by applying video content analysis, generate embeddings of these individuals 120_{*k*=1..3}, and track them as long as their camera's field of vision allows.

Each mobile entity detected by a robot is uniquely identified and is possibly associated, in a database stored within each robot, with the location where it was detected, and the timestamp of the detection. If the same entity is repeatedly detected at a same location, the robot may update the corresponding timestamp only if the difference between the two timestamps is superior to a predetermined duration threshold.

As represented by the waves, when two robots such as those in reference 110_{*j*=3} and 110_{*j*=4} enter within communication range of each other, they compare and update their database by comparing embeddings of individuals detected by the robot 110_{*j*=3} with those detected by the robot 110_{*j=*3}.

The communication range may depend on the type of monitoring device that is used. However, it is advantageous to keep it substantially smaller than the size of the whole environment so that the monitoring devices can communicate only when passing near each other and not when they are remotely located. To that end, a short-range wireless communication between the robots is preferred, such as Bluetooth, Near Field Communication, Zigbee or Infrared.

Accordingly, when the monitoring devices pass each other, they share their database through mutual communication according to the present method. However, when two monitoring devices are moving in a room but are at a distance superior to the communication range, they do not communicate.

In case a distance between embeddings of an individual detected by the robot 110_{*j*=3} and embeddings of an individual detected by the robot 110_{*j=*4} a is less than a predetermined threshold, the detected individuals are identified as a single individual. In that case, said identification corresponds to a "re-identification". Otherwise, e.g., if the distance is equal to or greater than the predetermined threshold, the detected individuals are considered to be two different individuals.

More precisely, the image of each detected individual is converted into a vector representation, named "embeddings", and having a dimension lower than the image dimension. This conversion can be implemented using machine learning models, in particular convolutional neural networks. Technically, the concept entails creating clusters of features that serve as a semantic feature encoded in a vector space. The dimensionality of the vectors makes it possible to efficiently manage data features.

Once the images are converted into vectors, a distance is computed between those vectors, that reflects the similarity of the compared images. In particular implementations, an Euclidian distance, a Cosine similarity distance or a Manhattan distance is computed.

This process is advantageous because it enables an individual to be re-identified, and *a fortiori* to be tracked within the environment 101, by "combining" the local perceptions of different robots.

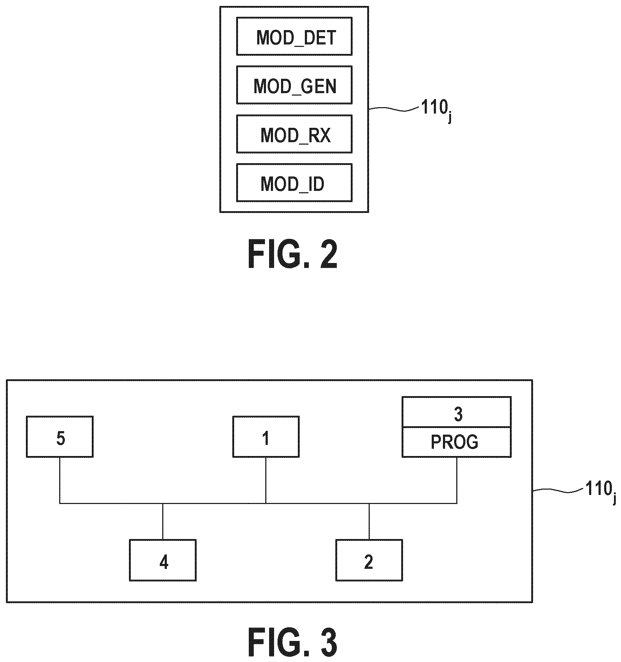

Figure 2 illustrates on-board modules in a monitoring device 110*ⱼ*, according to an example of implementation of the invention.

This monitoring device is configured to re-identify mobile entities. It includes, for this purpose, several functional modules:
- a detection module MOD_DET for detecting a mobile entity from data captured by a sensor of the monitoring device;
- a generation module MOD_GEN for generating first embeddings of a detected mobile entity;
- a reception module MOD_RX for receiving, from another monitoring device, second embeddings of a mobile entity detected from data captured by a sensor of that other monitoring device; and,
- an identification module MOD_ID for identifying the mobile entities detected by the monitoring devices as a single mobile entity if a distance between the first and second embeddings is less than a predetermined threshold, and as different mobile entities otherwise.

The functionalities attached to each of the modules are explained in detail later on when describing implementations of said re-identification method.

Figure 3 illustrates an example of the hardware architecture of the monitoring device of Figure 2.

To this end, the monitoring device has the hardware architecture of a computer. As shown in Figure 3, the monitoring device comprises a processor 1. Although illustrated as a single processor 1, two or more processors can be used according to particular needs, desires, or particular implementations of the monitoring device. Generally, the processor 1 executes instructions and manipulates data to perform the operations of the monitoring device and any algorithms, methods, functions, processes, flows, and procedures as described in the present disclosure.

The monitoring device also comprises communication means 5. Although illustrated as a single communication means 5 in Figure 3, two or more communication means can be used according to particular needs, desires, or particular implementations of the monitoring device. The communication means are used by the monitoring device for communicating with another monitoring device that is communicatively linked to a radio network in a distributed environment. Generally, the communication means 5 are operable to communicate with the radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated monitoring device.

The monitoring device also comprises a random access memory 2, a read-only memory 3, and a non-volatile memory 4. The read-only memory 3 of the monitoring device constitutes a recording medium conforming to the invention, which is readable by processor 1 and on which is recorded a computer program PROG conforming to the invention, containing instructions for carrying out the steps of the re-identification method according to the invention.

The program PROG defines functional modules of the electronic device, which are based on or control the aforementioned elements 1 to 5 of the electronic device, and which comprise in particular the modules described with reference to figure 2.

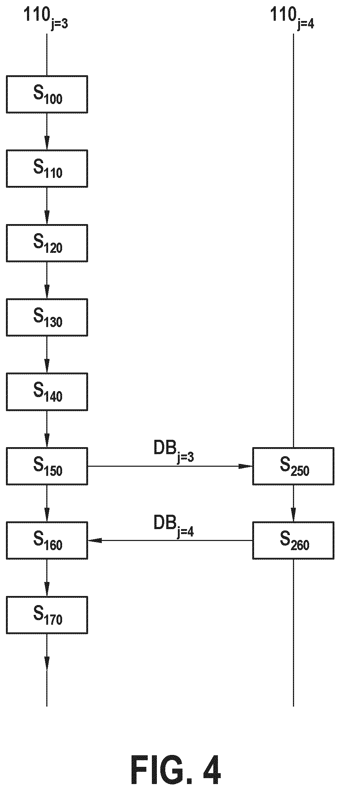

Figure 4 is a flowchart of a re-identification method executed by a monitoring device, according to an example of implementation of the invention.

As shown on Figure 4, the re-identification method comprises steps S100, S110, ..., S170 implemented by a first monitoring device, such as the robot 110_{*j*=3} of figure 1, and steps S250 and S260 implemented by a second monitoring device, such as the robot 110_{*j=*4} of figure 1.

The re-identification method comprises a first step S100 of obtaining data captured by a sensor of the robot 110_{*j=*3}. As previously mentioned, in particular implementations, that sensor is a camera configured to capture images of the surroundings of that robot 110_{*j=*3}. In a variant, that sensor is a sound sensor designed to capture ambient sounds in the surroundings, such as speech.

The method also comprises a step S110 during which data obtained at step S100 is analyzed to detect targeted mobile entities, such as the individuals 120*ₖ*, and track them. In This step can be carried out, for example, by the detection module MOD_DET of the robot 110_{*j=*3}. This step is for example implemented using YOLOv8, the latest version in the YOLO ("You Only Look Once") series of real-time object detection models developed by Ultralytics and released in January 2023, trained on the COCO dataset. The COCO dataset, for "Common Objects in Context", is a large-scale dataset for training and evaluating computer vision models, and that contains over 330K images, with more than 2.5 million object instances labeled across 80 object categories. In one implementation, the tracking is implemented using BoT-SORT (for "Batch Online Tracking with Space-Temporal Consistency"), an advanced multi-object tracking algorithm designed to track objects in real-time across video frames. BoT-SORT then assigns a unique identifier to each detected individual, and continues to track them as long as they remain within the camera's field of view.

The method also comprises a step S120 of generating embeddings of at least some of the individuals detected at step S110. This step can be carried out, for example, by the detection module MOD_GEN of the robot 110_{*j=*3}. More precisely, the image of each detected individual is converted into a vector representation, using a machine learning model, especially a convolutional neural network. In an implementation, the MobileNetV2 model is used for generating the embeddings. The skilled person can consult the following article for more details on this model: "MobileNetV2: Inverted Residuals and Linear Bottlenecks", Mark Sandler & Al, The IEEE Conference on Computer Vision and Pattern Recognition (CVPR), 2018, pp. 4510-4520.

In particular implementations, the pretrained weights of the neural network lack discriminative power, and the neural network is then fine-tuned using triplet loss to improve feature separation.

In triplet loss, the objective is to ensure that an "anchor point", a data point that serves as the reference, is closer to a "positive point" (a data point that is similar to the anchor, i.e., it belongs to the same class or category as the anchor) than it is to a "negative point" (a data point that is dissimilar to the anchor, i.e., it belongs to a different class or category than the anchor) in the feature space. The triplet loss function aims to minimize the distance between the anchor and the positive, while maximizing the distance between the anchor and the negative.

That fine-tuning is for example implemented using the Synthetic dataset. The skilled person can consult the following article for more details on this dataset: "Synthetic18K: Learning better representations for person re-id and attribute recognition from 1.4 million synthetic images", O. Can Uner & Al., Signal Processing: Image Communication, 2020, pp 1-40, 2020.

In step S130, data relating to the individuals detected in step S110 are stored in a database stored within the robot 110_{*j=*3}. More precisely, the identifier of each detected individual - which was assigned by the robot 110_{*j*=3} in step S110 -, is stored in this database, and is associated with the associated embeddings generated in step S120. In particular implementations, they are also associated with the location where they were detected, and the timestamp of detection.

The re-identification method then comprises a step S140 during which a second robot, such as robot 110_{*j*=4} of figure 1, is detected as being in the vicinity of robot 110_{*j*=3} . To that end, robots 110*ⱼ* are configured to emit radio waves, such as Bluetooth, near Field Communication, Zigbee or Infrared, and to listen to any waves emitted by other robots in their vicinity.

As illustrated by Figure 4, following detection of robot 110_{*j*=4} by robot 110_{*j*=3}, a step S150 is performed of transmitting at least a part of the content of the database *DBⱼ₌₃* stored within robot 110_{*j*=3} to robot 110_{*j*=4}. In an implementation, the entire content of the database is transmitted to robot 110*ⱼ₌₄*. In a variant, only data related to the recently detected individuals is shared with robot 110_{*j*=4} (e.g., individuals crossed in the last ten minutes). This database is received by robot 110_{*j*=4} during a step S250. In a variant, the database *DBⱼ₌₃* is not transmitted, and only a request to receive a database *DBⱼ₌₄* of individuals listed by the robot 110_{*j*=4} is transmitted.

In step S260, following reception of that database or of the request, the robot 110_{*j=*4} transmits its own database *DBⱼ₌₄* of detected individuals (the entire content or a part of it) to the robot 110_{*j*=3}, which is received by this robot 110_{*j*=3} during step S160. This step S160 can be carried out, for example, by the reception module MOD_RX of the robot 110_{*j=*3}. Of course, the order in which steps S150/S250 and S160/S260 are performed is of little importance.

The re-identification method then comprises a step S170 during which the content of the database received from robot 110_{*j*=4} is merged with that of robot 110_{*j=*3}. This step S170 can be carried out, for example, by the identification module MOD_ID of the robot 110_{*j=*3}.

More precisely, the received data are integrated into the robot's database using a distance-based merging algorithm: for each new cluster of embeddings, the distance to all existing (e.g., prestored) clusters of embeddings is computed. If the distance between a cluster of embeddings related to an individual detected by robot 110_{*j*=3} and a cluster of embeddings related to an individual detected by robot 110_{*j*=4} is less than a predetermined threshold, the robot 110_{*j*=3} then identifies the cluster of embeddings as representing a single individual, and the two clusters of embeddings are merged. The goal is to group the clusters of embeddings that represent a single individual into a single cluster, regardless of the robots that collected them. On the contrary, if the distance equals or is greater than the predetermined threshold, the robot 110_{*j*=3} considers that it represents an individual it has never met before.

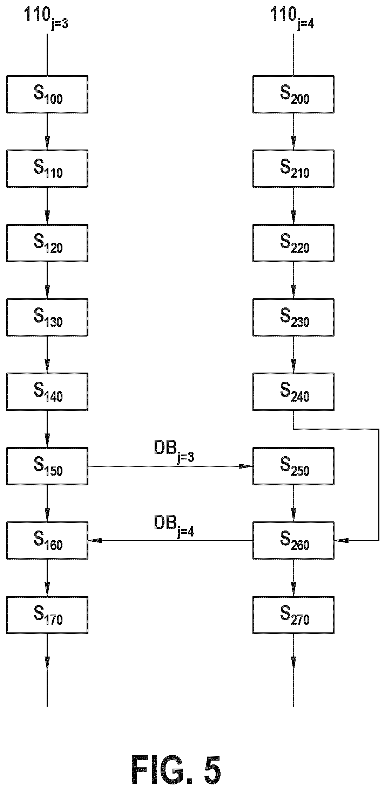

Figure 5 is a flowchart of a re-identification method executed by a monitoring device, according to another example of implementation of the invention.

This figure illustrates that the two robots 110_{*j*=3} and 110_{*j*=4} have relatively similar behaviors. The steps referred to in Figure 4 are identical and are therefore not described for the sake of brevity. Therefore, only steps S200, S210 ... S270 performed by robot 110_{*j*=4} are described below.

The re-identification method comprises a step S200 of obtaining data captured by a sensor of the robot 110_{*j*=4}. In particular implementations, that sensor is a camera configured to capture images of the surroundings of that robot 110_{*j=*3}. In a variant, that sensor is a sound sensor designed to capture ambient sounds in the surroundings, such as speech. Whatever the case, to obtain better results, the sensors used by the robots 110_{*j=*3,4} should be of the same type.

The method also comprises a step S210 during which data obtained at step S200 is analyzed to detect targeted mobile entities, such as the individuals 120*ₖ*, and track them. This step is similar to step S110 performed by robot 110_{*j*=3}, and to obtain better results, the models used by the two robots 110_{*j*=3,4}. to implement that step should be identical.

The method also comprises a step S220 of generating embeddings of each individual detected at step S210. This step is similar to step S210 performed by robot 110_{*j*=3}, and to obtain better results, the models used by the two robots 110_{*j*=3,4}. should be identical.

In step S230, data relating to the individuals detected in step S210 are stored in a database stored within the robot 110_{*j*=4}. This step is similar to step S130 performed by robot 110_{*j=*3}.

The re-identification method then comprises a step S240 during which another robot, such as robot 110_{*j*=3} of figure 1, is detected as being in the vicinity of robot 110_{*j*=4} . This step is similar to step S140 performed by robot 110_{*j*=3}.

At the end, the re-identification method comprises a step S270 during which the content of the database received from robot 110_{*j*=3} is merged with that of robot 110_{*j*=4}. This step is similar to step S170 performed by robot 110_{*j*=3}.

### Experimental setup

A series of simulated experiments in which human robotic systems, named "robots" in the following, navigate within a closed environment where multiple individuals move freely, were designed to evaluate the ability of a swarm to perform re-identification using the method of the invention.

Specifically, the manner in which communication facilitates the robot swarm in maintaining a cohesive and resilient shared database of the detected individuals was evaluated.

The environment and individuals were simulated using Unity, while robot movements were simulated in ARGoS3 (for "Autonomous Robots Go Swarming 3"), and mirrored in Unity via Robot Operating System communication. The environment was a 625 *m*² empty square room with bright lighting, surrounded by walls measuring 3°metres in height.

Additionally, a second environment identical to the first one was also considered, but featuring five obstacles in the form of 5 × 3 × 0.2 metres panels that obstruct both movement and visibility.

Individuals could move randomly at speeds ranging from 0.5 to 1.5 m/s, while robots could execute a random walk with a linear speed of 0.3 m/s, and an angular speed of about 0.2 radian/s, thus ensuring stable tracking performance during turns.

### Protocol

For each environment, two groups of six and fifty individuals were considered. For each combination of environment and group, two swarm sizes of four and eight robots were evaluated, except in the 6-person scenario, where only four robots were used. In addition, the environments were equipped with four CCTV cameras positioned at the corners of the room, facing the center, to capture video footage for comparison with the robots' performance. For experiments with fifty individuals and eight robots, four additional CCTV cameras were placed in the center of the room, each facing a different corner. Each experiment lasted 5 minutes, during which robots and individuals moved freely while avoiding obstacles. The robots continuously recorded video data from their on-board cameras, while the CCTV cameras recorded from fixed positions. Robot positions were also recorded to verify communication range during video playback. After the simulation, the video produced by each robot was processed independently and sequentially in a synchronized manner.

To avoid excessive data exchange when robots were in close proximity for long periods of time (e.g., 1 minute), communication occurred at most every 5 seconds. Four communication settings were considered: no communication, communication with a range of 1.5m, communication with a range of 5m, and communication with a range of 10m. CCTV cameras processed their video feeds synchronously using the same algorithm as the robots, but only two communication settings were considered: no communication and centralized communication, where all cameras could exchange data every 5 seconds.

For each experiment, the cumulative matching characteristics (CMC) plots, the mean average precision (mAP) and the average cluster purity values were computed for both robots and CCTV cameras.

Cluster purity is a metric used to evaluate the quality of clustering results. Specifically, cluster purity measures how "pure" each cluster is with respect to the true labels or classes of the data points within that cluster. If duplicate identifiers occurred, only the largest cluster was considered. Undetected individuals were penalized by having their data assigned a 0% proportion. The CMC plots and mAP values were computed using 10% of all images observed by the robots during the experiment as queries, with a minimum of 1000 and a maximum of 5000 queries.

### Experimental results

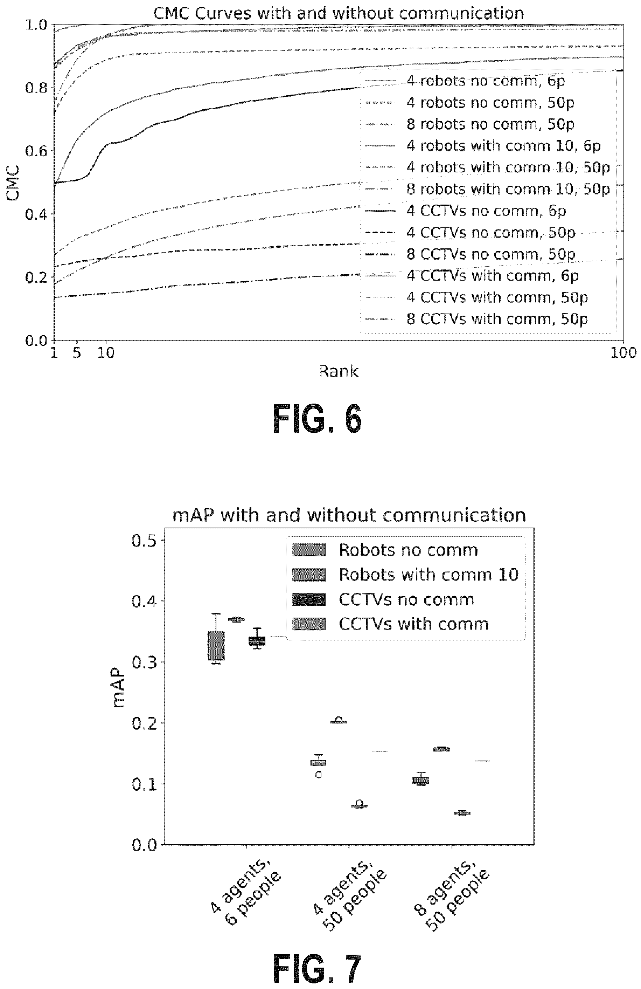

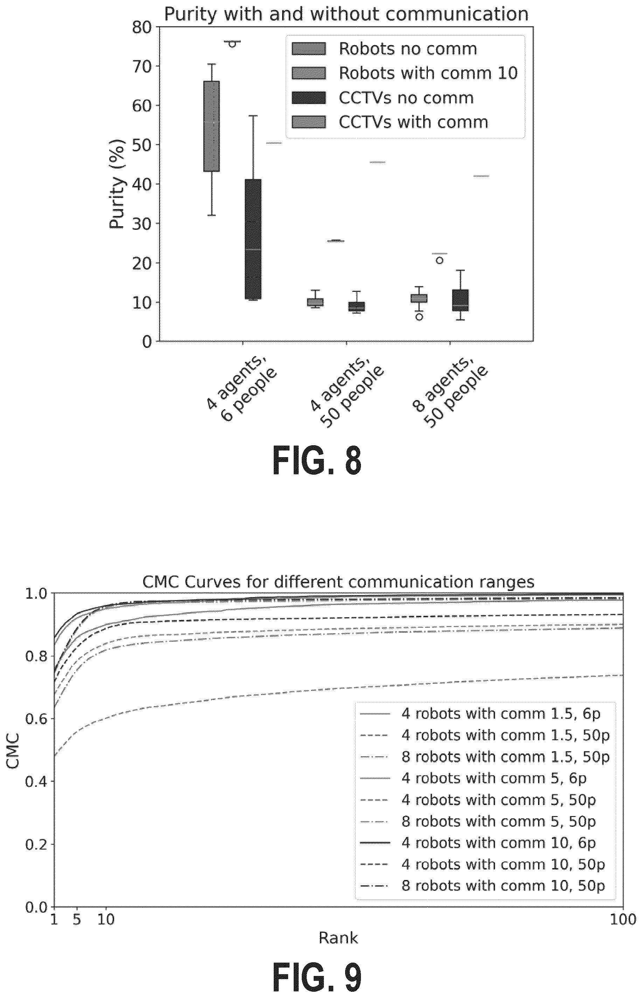

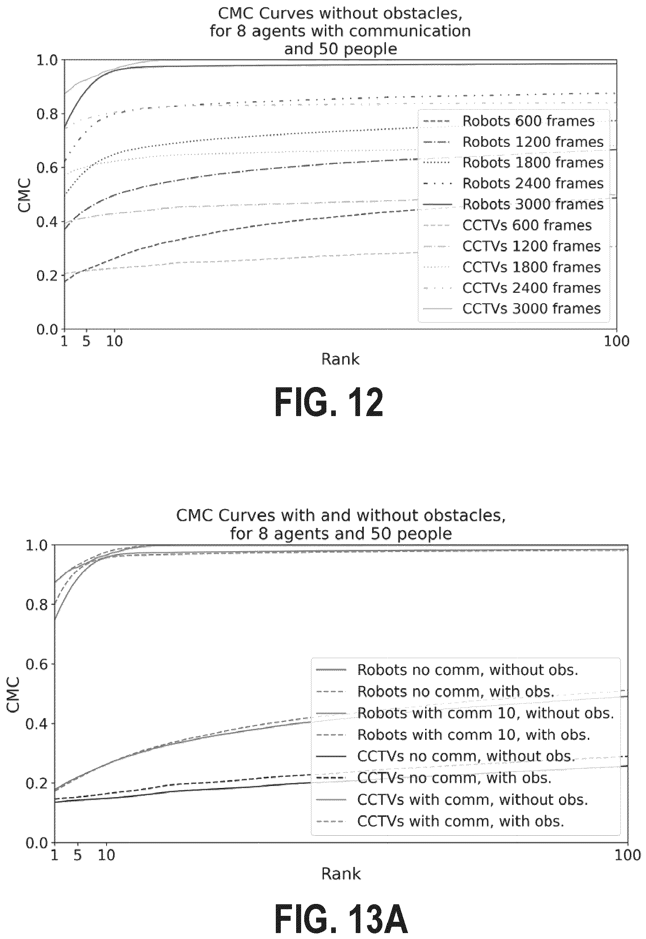

Figure 6 shows cumulative matching characteristics (CMC) plots for robots implementing the method of the invention and for CCTV cameras, when communication is enabled and disabled. Figure 7 shows mean average precision (mAP) values for robots implementing the method of the invention and for CCTV cameras, when communication is enabled and disabled. Figure 8 shows purity values for robots implementing the method of the invention and for CCTV cameras, when communication is enabled and disabled. And figure 12 shows CMC plots for robots implementing the method of the invention for eight robots and for CCTV cameras, at different moments, when communication is enabled.

Figures 6, 7 and 8 demonstrate that, in the absence of communication, robots outperform CCTV cameras, in terms of CMC, purity and mAP. This difference is especially noticeable in experiments involving fifty individuals. As a matter of fact, although CCTV cameras have a wider field of view, allowing them to observe more individuals simultaneously, frequent occlusions reduce the consistency of their results. Overall, the results without communication remain relatively low, especially in scenarios with fifty individuals.

However, the introduction of communication significantly improves the robots' performance, especially in the fifty-person experiments. This shows that by exchanging information, the robots improve cluster quality - both by detecting new individuals and by refining previously detected individuals by correctly clustering the data received from their peers. As expected, centralised communication enables CCTV cameras to achieve the best results in all configurations.

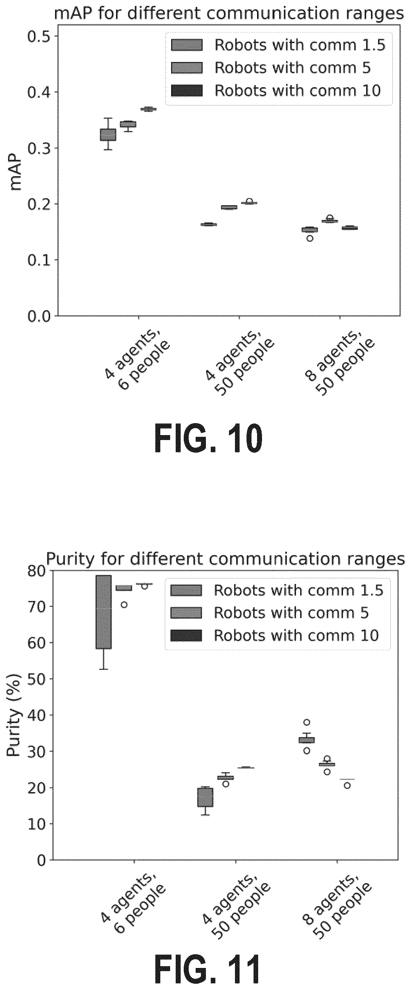

In addition, an analysis of the results at different moments of the experiments (provided by Figure 10) shows that the robots are able to achieve better CMC earlier than the CCTV cameras. The cameras also yield lower mAP scores than the robots, indicating that although they detect more individuals due to their wider field of view and more efficient communication, the clusters they produce are less consistent compared to those of the robots.

It is worth noting that two additional factors affect performance. First, the number of individuals to be detected has a direct impact: as the number increases, the likelihood of errors increases, leading to lower overall performance. Second, the number of robots or cameras also plays a role, albeit more subtly. A higher number of robots leads to more frequent interactions between them. Without communication, this is only detrimental, as the robots waste time avoiding each other, and may occlude each other's field of vision.

For CCTV cameras, lower performance with additional cameras may also result from the presence of robots: because cameras sometimes misidentify robots as individuals, and a higher number of robots increases misclassification errors. However, when communication is enabled, a greater number of robots or cameras results in data being acquired. As a result, the CMC plot increases, but other metrics decrease slightly due to an accumulation of errors. This suggests a trade-off between the amount of data shared and the consistency of the clusters formed by the robot.

In any case, the results obtained demonstrate that communication has a substantial impact on the re-identification performances of both robots and cameras.

Figure 9 shows CMC plots for robots implementing the method of the invention and for CCTV cameras, for different communication ranges. Figure 10 shows mAP values for robots implementing the method of the invention and for CCTV cameras, for different communication ranges. And figure 11 shows purity values for robots implementing the method of the invention and for CCTV cameras, for different communication ranges.

The effect of communication frequency on robot performance has also been studied.

Increasing the communication range, and thus the communication frequency, generally improves performance because the robots can share more data. However, the results confirm the previously identified trade-off: in experiments with eight robots, as the CMC plot increases, the mAP initially increases before decreasing, and the purity decreases throughout.

Since a larger number of robots leads to more frequent encounters, there is a threshold where additional encounters improve the detection of new individuals, but at the same time reduce cluster consistency. Depending on the application and the number of robots available, the communication range could then be adjusted, to optimize performance.

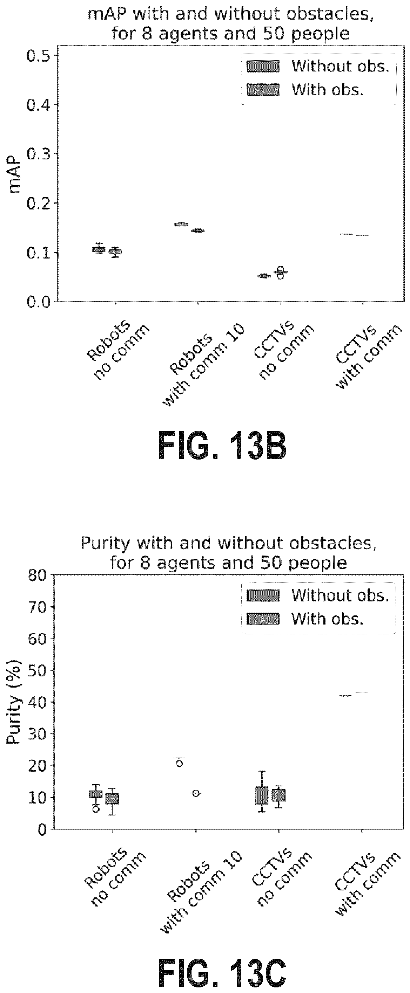

Figures 13A, 13B and 13C show CMC plots, mAP values, and purity values, with and without obstacles.

The effect of obstacles obstructing vision on robot performance has also been studied.

The results show minimal effects, and in some cases obstacles even have positive effects. Specifically, obstacles tend to slightly improve CMC performance while decreasing mAP and purity. This may be because while obstacles introduce occlusions, they also increase a separation between individuals in the environment. This finding also suggests that the re-identification method is robust to occlusions, allowing robots to correctly re-identify individuals even after they disappear behind an obstacle.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method for entity re-identification, the method being implemented by a first monitoring device (110*ⱼ*) of a plurality of monitoring devices able to move in an environment and comprising:
- detecting (S110) a mobile entity (100*ₖ*) from data captured by a sensor of the first monitoring device;
- generating (S120) first embeddings of the detected mobile entity;
- receiving (S160), from a second monitoring device of the plurality, second embeddings of a mobile entity detected from data captured by a sensor of the second monitoring device; and,
- identifying (S170) the mobile entities detected by the first and second monitoring devices as a single mobile entity if a distance between the first and second embeddings is less than a predetermined threshold, said identification step then corresponding to a re-identification, and as different mobile entities otherwise.

2. The re-identification method according to claim 1, further comprising transmitting (S150) the first embeddings, by the first monitoring device and to the second monitoring device, to enable the second monitoring device to determine whether a mobile entity detected by the second monitoring device is also detected by the first monitoring device or not.

3. The re-identification method according to claim 1 or 2, wherein data exchange between the first and second monitoring devices is implemented using short-range wireless communications between the first and second monitoring devices.

4. The re-identification method according to any one of claims 1 to 3, wherein the first and second embeddings are generated by a machine learning model trained to generate closed embeddings for similar mobile entities, and distant embeddings for different mobile entities.

5. The re-identification method according to claim 4, further comprising:
- training the machine learning model; and,
- fine-tuning the machine learning model using a triplet loss approach.

6. The re-identification method according to any one of claims 1 to 5, further comprising tracking the detected mobile entity by the first monitoring device.

7. The re-identification method according to any one of claims 1 to 6, wherein the first and second monitoring devices correspond to robots, the captured data corresponds to images from the robots' environment captured by cameras on the robots, and the mobile entities correspond to individuals moving in the environment.

8. A monitoring device (110*ⱼ*) configured to implement the re-identification method according to any one of claims 1 to 7.

9. A re-identification system (100) comprising a monitoring device (110*ⱼ*) according to claim 8, named "first monitoring device", and a second monitoring device, wherein the first and second monitoring devices are equipped with a same type of sensor for detecting a mobile entity, and wherein the first and second monitoring devices use a same machine learning model to generate embeddings.

10. A computer program (PROG) which on execution by an apparatus causes the apparatus to execute the re-identification method according to any one of claims 1 to 7.

11. A non-transitory computer-readable medium storing a program which, when executed by a microprocessor or computer system, causes the microprocessor or computer system to perform the re-identification method according to any one of claims 1 to 7.

## Amended claims

### Amended claims in accordance with Rule 137(2) EPC.

1. A computer-implemented method for entity re-identification of mobile entities corresponding to individuals moving in an environment, the method being implemented by a first monitoring device (110*ⱼ*) of a plurality of monitoring devices corresponding to robots and able to move in said environment, the method comprising:
- detecting (S110) a mobile entity (100*ₖ*) from first data captured by a sensor of the first monitoring device, said first data corresponding to images of the environment of a robot, corresponding to the first device, captured by cameras of said robot;
- generating (S120) first embeddings of the detected mobile entity;
- receiving (S160), from a second monitoring device of the plurality, second embeddings of a mobile entity detected from second data captured by a sensor of the second monitoring device, said second data corresponding to images of the environment of another robot, corresponding to the second device, captured by cameras of said other robot; and,
- identifying (S170) the mobile entities detected by the first and second monitoring devices as a single mobile entity if a distance between the first and second embeddings is less than a predetermined threshold, said identification step then corresponding to a re-identification, and as different mobile entities otherwise.

2. The re-identification method according to claim 1, further comprising transmitting (S150) the first embeddings, by the first monitoring device and to the second monitoring device, to enable the second monitoring device to determine whether a mobile entity detected by the second monitoring device is also detected by the first monitoring device or not.

3. The re-identification method according to claim 1 or 2, wherein data exchange between the first and second monitoring devices is implemented using short-range wireless communications between the first and second monitoring devices.

4. The re-identification method according to any one of claims 1 to 3, wherein the first and second embeddings are generated by a machine learning model trained to generate closed embeddings for similar mobile entities, and distant embeddings for different mobile entities.

5. The re-identification method according to claim 4, further comprising:
- training the machine learning model; and,
- fine-tuning the machine learning model using a triplet loss approach.

6. The re-identification method according to any one of claims 1 to 5, further comprising tracking the detected mobile entity by the first monitoring device.

7. The re-identification method according to any one of claims 1 to 6, wherein the first monitoring device stores a database storing at least one identifier of an individual associated with an embedding cluster comprising at least one embedding, and
wherein identifying the mobile entities comprises integrating the received second embedding into said database by using a distance-based merging process in which
the distance between said received second embedding and an embedding cluster already stored is computed, and
if said distance is less than said predetermined threshold, merging the second embedding with said embedding cluster.

8. A monitoring device (110*ⱼ*) configured to implement the re-identification method according to any one of claims 1 to 7.

9. A re-identification system (100) comprising a monitoring device (110*ⱼ*) according to claim 8, named "first monitoring device", and a second monitoring device, wherein the first and second monitoring devices are equipped with a same type of sensor for detecting a mobile entity, and wherein the first and second monitoring devices use a same machine learning model to generate embeddings.

10. A computer program (PROG) which on execution by an apparatus causes the apparatus to execute the re-identification method according to any one of claims 1 to 7.

11. A non-transitory computer-readable medium storing a program which, when executed by a microprocessor or computer system, causes the microprocessor or computer system to perform the re-identification method according to any one of claims 1 to 7.
